(19)

Europäisches
Patentamt
European
Patent Office
Office européen
des brevets

(11) **EP 2 718 356 B1**

(12) **EUROPEAN PATENT SPECIFICATION**

(45) Date of publication and mention
of the grant of the patent:
**09.08.2017 Bulletin 2017/32**

(51) Int Cl.:
**C08K 3/22** (2006.01)          **C09D 1/00** (2006.01)
**C09D 5/08** (2006.01)

(21) Application number: **12742972.8**

(22) Date of filing: **06.06.2012**

(86) International application number:
**PCT/US2012/041082**

(87) International publication number:
**WO 2012/170515 (13.12.2012 Gazette 2012/50)**

(54) **COATING COMPOSITIONS INCLUDING MAGNESIUM HYDROXIDE AND RELATED COATED SUBSTRATES**

BESCHICHTUNGSZUSAMMENSETZUNG MIT MAGNESIUMHYDROXIDEN UND ENTSPRECHENDE BESCHICHTETE SUBSTRATE

COMPOSITIONS DE REVÊTEMENT CONTENANT DE L'HYDROXYDE DE MAGNÉSIUM ET SUBSTRATS REVÊTUS ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.06.2011   US 201113156740**

(43) Date of publication of application:
**16.04.2014   Bulletin 2014/16**

(73) Proprietor: **PRC-Desoto International, Inc.
Sylmar, California 91342 (US)**

(72) Inventors:
• **ABRAMI, Siamanto
Glendale, California 91203 (US)**
• **TANG, Guangliang
Stevenson Ranch, California 91381 (US)**

• **TIPON, Polyamie
Chino Hills, California 91709 (US)**

(74) Representative: **f & e patent
Fleischer, Engels & Partner mbB, Patentanwälte
Braunsberger Feld 29
51429 Bergisch Gladbach (DE)**

(56) References cited:
• **DATABASE WPI Week 201119 Thomson Scientific, London, GB; AN 2011-C11399 XP002684212, & WO 2011/024758 A1 (KIKUSUI CHEM IND CO LTD) 3 March 2011 (2011-03-03)**
• **DATABASE WPI Week 201111 Thomson Scientific, London, GB; AN 2010-P12315 XP002684213, & CN 101 857 756 A (NEIMENGGU XINGTAI CONSTR CO LTD) 13 October 2010 (2010-10-13)**

**Description**

FIELD OF THE INVENTION

The present invention relates to coating compositions that comprise magnesium hydroxide particles having a particle size of less than 200 nanometers, to multi-component coating compositions in which at least one coating layer is deposited from such a coating composition, and to substrates at least partially coated with at least one layer deposited from such a composition.

BACKGROUND OF THE INVENTION

Coatings are applied to appliances, automobiles, aircraft, and the like for a number of reasons, typically for both corrosion protection and enhanced performance. In order to improve the corrosion resistance of a metal substrate, corrosion inhibitors are typically used in the coatings applied to the substrate. A common corrosion inhibitor is strontium chromate, which provides excellent corrosion resistance for the metal substrates, especially for aluminum substrates. However, corrosion inhibitors such as strontium chromate are highly toxic and carcinogenic, and their use results in the production of waste streams that pose environmental concerns and disposal issues.

As a result, it is desirable to provide a corrosion resistant coating without chromate pigments while exhibiting corrosion resistance properties on par with or superior to a similar non-chrome containing composition.

SUMMARY

Embodiments of the present invention are directed to coating compositions including magnesium hydroxide having an average primary particle size of less 200 nanometers (nm) alone or in combination with other components, having good adhesion to metals, including aluminum and aluminum alloys, bare and galvanized steel, zinc, magnesium and magnesium alloys and excellent corrosion resistance after 3,000 hours of salt-fog exposure. In some embodiments, the invention relates to coating compositions including corrosion resistant magnesium hydroxide particles that can provide similar properties as magnesium oxide nano particles, presenting an alternative non-chromate corrosion inhibitor. The invention further relates to processes for preparing the coating compositions containing magnesium hydroxide nano particles, alone or in combination with other components.

In some respects, the present invention is directed to methods of using a coating composition comprising providing a substrate to be coated and coating the substrate with a coating composition having an effective corrosion-inhibiting amount of magnesium hydroxide particles.

The coatings described herein have excellent corrosion resistance performance and adhesion. The coating compositions are useful in many industries, including the aerospace and aircraft industries.

DETAILED DESCRIPTION

Embodiments of the present invention are directed to coating compositions including corrosion resisting magnesium hydroxide nano particles having an average primary particle size of less than 200 nm. As used herein, the term "nano particles" refers to particles that have at least one dimension that is on the order of a few nanometers. As used herein, the term "corrosion resisting magnesium hydroxide particles" refers to particles that, when included in a coating composition that is deposited upon a substrate, act to provide a coating that resists or, in some cases, even prevents, the alteration or degradation of the substrate, such as by a chemical or electrochemical oxidizing process, including rust in iron containing substrates and degradative oxides in aluminum substrates. Coating compositions of embodiments of the present invention are free of chromate compounds, thereby eliminating the production of waste streams that pose environmental concerns.

Coating compositions according to embodiments of the present invention include corrosion resisting magnesium hydroxide particles in at least one component of the coating composition. Specifically, the corrosion resisting magnesium hydroxide particles may be present in any or all of the components of the coating composition. In addition to the corrosion resisting magnesium hydroxide particles, coating compositions according to embodiments of the present invention also include a film forming resin and/or other components.

In certain embodiments, the coating compositions are formulated as a one-component composition where a curing agent (or activator) is admixed with other components of the coating composition to form a storage stable composition. In such an embodiment, the corrosion resisting magnesium hydroxide nano particles are included in the storage stable composition. Alternatively, the coating compositions of the present invention can be formulated as a two-component coating composition where a curing agent (or activator) is included in an activator component that is added to a preformed admixture of the other composition components just prior to application. The corrosion resisting magnesium hydroxide particles may be present in either or both of the activator component or pre-formed admixture of the two-component composition. In still other embodiments of the present invention, the coating compositions can be formulated as a three-component coating composition, for example, a base component, an activator component, and a thinner component, where the three components are mixed sometime prior to application. The corrosion resisting magnesium hydroxide particles are present in at least one of the base component, activator component, or thinner component of the three component system. Additionally, the corrosion resisting magnesium hydroxide particles may be present in at least two of the base component, activator component, or thinner component of the three component system. Further, the corrosion resisting magnesium hydroxide particles may be present in each of the base component, activator component, and thinner component of the three component system.

The coating compositions of the present invention may be in the form of a liquid coating composition, such as a waterborne (WB) coating composition, solvent-borne (SB) coating composition, or electrodepositable coating composition. The coating compositions may also be in the form of a co-reactable solid in particulate form (i.e., a powder coating composition). The coating compositions of the present invention may be prepared by any of a variety of suitable methods. For example, in certain embodiments, the corrosion resisting magnesium hydroxide particles are added at any time during the preparation of the coating composition, so long as they form a stable dispersion. In certain embodiments of the present invention, the coating composition can be prepared by first blending a film-forming resin, the corrosion resisting magnesium hydroxide particles, and a diluent, such as an organic solvent and/or water. When water is used as a diluent, the coating composition may be a waterborne coating composition. In certain embodiments, the waterborne coating composition may include a film-forming resin formed from the reaction of a polyamine with an epoxy functional polymer. According to embodiments of the present invention, the corrosion resisting magnesium hydroxide particles may be present in any or all of the components of the waterborne coating composition.

When organic solvent is used as a diluent, the coating composition may be a solvent-borne coating composition. In certain embodiments, the solvent-borne coating composition may include a film-forming resin formed from the reaction of a polyamine with an epoxy functional polymer. For example, the solvent-borne coating composition may be a three component system including a base component, e.g., the epoxy functional polymer, an activator component, e.g., the polyamine, and optionally a thinner component, e.g., solvents mixture. It should be understood, however, that any of the base component, activator component, or thinner component can include other components, such as pigments or other additives. In use, when ready to apply the coating composition to a substrate, the base component and the activator component, and if necessary the thinner component, are mixed together, applied to the substrate and allowed to cure. According to embodiments of the present invention, the corrosion resisting magnesium hydroxide particles may be present in any or all of the components of the solvent-borne coating composition.

## CORROSION RESISTING MAGNESIUM HYDROXIDE PARTICLES

According to embodiments of the present invention, magnesium hydroxide nano particles are present in at least one component of the coating composition in an amount ranging from 5 to 60 weight percent, for example 5 to 40 percent, or 5 to 20 percent with the weight percent based on the total weight of the cured coating composition. In certain embodiments, the corrosion resisting magnesium hydroxide particles may be a composite particle and may include components other than magnesium hydroxide. For example, the corrosion resisting magnesium hydroxide particles may include 50 to 100 weight percent magnesium hydroxide based on the total weight of the particles. In certain embodiments, the corrosion resisting magnesium hydroxide particles may also include 0 to 50 weight percent of a suitable inorganic oxide, such as those described in U.S. Patent No. 7,745,010 and U.S. Patent Application Ser. Nos. 11/956,542 and 11/213, 136. For example, the corrosion resisting particles of embodiments of the present invention may include 0 to 50 weight percent of magnesium oxide, based on the total weight of the corrosion resisting magnesium hydroxide particles. In other embodiments, the coating compositions include magnesium hydroxide nano particles consisting essentially of magnesium hydroxide. As used herein, the term "consisting essentially of magnesium hydroxide" means that the corrosion resisting particles contain primarily magnesium hydroxide, but may contain other substances that do not affect the corrosion resisting properties of the magnesium hydroxide, but that are not themselves corrosion resisting particles. For instance, particles consisting essentially of magnesium hydroxide would not also contain corrosion resisting particles of another substance. In some embodiments, however, corrosion resisting magnesium hydroxide particles consisting essentially of magnesium hydroxide include magnesium hydroxide throughout the entire particle. In contrast, according to certain embodiments, particles that include magnesium hydroxide only on the surface of the particle and not at the core of the particle would not be considered a magnesium hydroxide particle consisting essentially of magnesium hydroxide.

In certain embodiments, in addition to the magnesium hydroxide nano particles, the coating composition may further include other corrosion resisting particles. For example, the coating composition may include a mixture of magnesium hydroxide nano particles and other corrosion resisting particles, such as corrosion resisting particles including an inorganic oxide. The mixture of corrosion resisting magnesium hydroxide particles and corrosion resisting inorganic oxide particles may include a mixing ratio of 90:10 to 10:90. Examples of suitable corrosion resisting inorganic oxide particles may include those described in U.S. Patent No. 7,745,010 and U.S. Patent Application Ser. Nos. 11/956,542 and 11/213,136.

In certain embodiments, the corrosion resisting magnesium hydroxide particles may have a B.E.T. specific surface area of at least 10 square meters per gram, such as 30 to 500 square meters per gram, or, in some cases, 80 to 250 square meters per gram. As used herein, the term "B.E.T. specific surface area" refers to a specific surface area determined by nitrogen adsorption according to the ASTMD 3663-78 standard based on the Brunauer-Emmett-Teller method described in the periodical "The Journal of the American Chemical Society", 60, 309 (1938).

In certain embodiments, the corrosion resisting magnesium hydroxide particles have a calculated equivalent spherical diameter (i.e., average primary particle size) of no more than 200 nm, such as no more than 150 nm, or in certain embodiments, 5 to 130 nm. In other embodiments, the corrosion resisting magnesium hydroxide particles have a calculated equivalent spherical diameter of no more 100 nm, such as no more than 50 nm, or, in certain embodiments, no more than 20 nm. As will be understood by those of ordinary skill in the art, a calculated equivalent spherical diameter can be determined from the B.E.T. specific surface area according to the following equation:

$$\text{Diameter (nanometers)} = 6000/[BET\ (\text{m}^2/\text{g})^*\rho\ (\text{grams/cm}^3)]$$

Primary particle size of a particle refers to the smallest diameter sphere that will completely enclose the particle. As used herein, the term "primary particle size" refers to the size of an individual particle (i.e., a primary particle) as opposed to an agglomeration of two or more individual particles. As used herein, the term "agglomerated particle size" refers to the size of an agglomeration of two or more individual particles.

In certain embodiments, the corrosion resisting magnesium hydroxide particles have an average primary particle size of no more than 200 nm, such as no more than 150 nm, or, in certain embodiments, 5 to 130 nm, as determined by visually examining a micrograph of a transmission electron microscopy ("TEM") image, measuring the diameter of the particles in the image, and calculating the average primary particle size of the measured particles based on the magnification of the TEM image. In other embodiments, the corrosion resisting magnesium hydroxide particles have an average primary particle size of no more than 130 nm, such as no more than 50 nm, or, in certain embodiments, no more than 20 nm, as determined by visually examining a micrograph of a transmission electron microscopy ("TEM") image, measuring the diameter of the particles in the image, and calculating the average primary particle size of the measured particles based on the magnification of the TEM image. One of ordinary skill in the art will understand how to prepare such a TEM image and determine the average primary particle size based on the magnification.

One of ordinary skill in the art will also understand how to determine the average primary particle size based on electrophoresis.

The shape (or morphology) of the corrosion resisting magnesium hydroxide particles can vary. For example, the primary particles can have generally spherical morphologies, or they can have morphologies that are cubic, platy, or acicular (elongated or fibrous). Additionally, the agglomerated particles are agglomerations of the primary particles, and therefore, can have any morphology that results from the agglomeration of the above-described primary particles.

## FILM FORMING RESIN

In certain embodiments, the coating compositions of the present invention include a film-forming resin in addition to the corrosion resisting magnesium hydroxide particles. As used herein, the term "film-forming resin" refers to resins that can form a self-supporting continuous film on at least a horizontal surface of a substrate upon removal of any diluents or carriers present in the composition or upon curing at ambient or elevated temperature.

Film-forming resins that may be used in the coating compositions of the present invention include, without limitation, those used in aerospace coating compositions, automotive OEM coating compositions, automotive refinish coating compositions, industrial coating compositions, architectural coating compositions, and coil coating compositions, among others.

In certain embodiments, the film-forming resin included in the coating compositions of the present invention comprises a thermosetting film-forming resin. As used herein, the term "thermosetting" refers to resins that "set" irreversibly upon curing or crosslinking, wherein the polymer chains of the polymeric components are joined together by covalent bonds. This property is usually associated with a crosslinking reaction of the composition constituents often induced, for example, by heat or radiation. See Hawley, Gessner G., The Condensed Chemical Dictionary, Ninth Edition., page 856; Surface Coatings, vol. 2, Oil and Colour Chemists' Association, Australia, TAFE Educational Books (1974). Curing or crosslinking reactions also may be carried out under ambient conditions. Once cured or crosslinked, a thermosetting resin will not melt upon the application of heat and is insoluble in solvents. In other embodiments, the film-forming resin included within the coating compositions of the present invention comprises a thermoplastic resin. As used herein, the term "thermoplastic" refers to resins that comprise polymeric components that are not joined by covalent bonds and thereby can undergo liquid flow upon heating and are soluble in solvents. See Saunders, K. J., Organic Polymer Chemistry, pp. 41-42, Chapman and Hall, London (1973).

In certain embodiments of the present invention, the film-forming resin is present in the coating compositions of the present invention in an amount greater than 10 weight percent, such as 20 to 90 weight percent, or, in some cases, 40 to 70 weight percent, with weight percent being based on the total weight of the coating composition. When a curing agent is used, it may, in certain embodiments, be present in an amount of up to 70 weight percent, such as 10 to 70 weight percent; this weight percent is also based on the total weight of the coating composition.

According to certain embodiments of the present invention, the uncured thermosetting film-forming resin includes corrosion resisting magnesium hydroxide particles having an average primary particle size of less than 200 nm. As used herein, the term "uncured" refers to resins that have not yet been cured or crosslinked. Accordingly, the uncured thermosetting film-forming resin may include separate components, such as a base component (e.g., an epoxy functional polymer component) and an activator component (e.g., a polyamine component), each of which, or both, may include corrosion resisting magnesium hydroxide particles having an average primary particle size of less than 200 nm.

Film-forming resins suitable for use in the coating compositions of the present invention include, for example, those formed from the reaction of a polymer having at least one type of reactive group and a curing agent having reactive groups reactive with the reactive group(s) of the polymer. As used herein, the term "polymer" is meant to encompass oligomers, and includes, without limitation, both homopolymers and copolymers. The polymers can be, for example, acrylic, saturated or unsaturated polyester, polyurethane or polyether, polyvinyl, cellulosic, acrylate, silicon-based polymers, co-polymers thereof, and mixtures thereof, and can contain reactive groups such as epoxy, carboxylic acid, hydroxyl, isocyanate, amide, carbamate and carboxylate groups, among others, including mixtures thereof.

According to embodiments of the present invention, the coating compositions are in the form of liquid coating compositions, examples of which include waterborne (WB) and solvent-borne (SB) coating compositions and electrodepositable coating compositions. The coating compositions of the present invention may also be in the form of a co-reactable solid in particulate form (i.e., a powder coating composition).

The coating compositions of the present invention may be prepared by any of a variety of methods. For example, in certain embodiments, the corrosion resisting magnesium hydroxide particles are added at any time during the formulation of a coating composition comprising a film-forming resin, so long as they form a stable dispersion in a film-forming resin. Coating compositions of the present invention can be prepared by first mixing a film-forming resin, the previously described corrosion resisting particles, pigments, fillers and diluents, such as an organic solvent(s) and/or water, dispersing the mixture with a high speed disperser at 1000 to 2000 RPM for 10 to 30 minutes. The dispersion may then be passed through a paint mill to achieve grinding fineness of 5 plus as checked with a grinding gauge.

## WATERBORNE COATING COMPOSITIONS

When water is used as a diluent, the coating composition may be a waterborne coating composition. In certain embodiments, the waterborne coating composition may include a film-forming resin formed from the reaction of an epoxy functional polymer base component with a polyamine activator component. For example, in certain embodiments, the present invention may comprise epoxy resins such as diglycidyl ethers of bisphenol A, bisphenol F, glycerol, novolacs, and the like. Exemplary suitable polyepoxides are described in U.S. Pat. No. 4,681,811 at col. 5, lines 33 to 58, the cited portion of which being incorporated herein by reference herein. Additionally, in certain embodiments, the present invention may comprise polyamine curing agents such as aliphatic amine and adducts, cycloaliphatic amines, amidoamines and polyamides. Exemplary suitable polyamines are described in U.S. Pat. No. 4,046,729 at col. 6, line 61 to col. 7, line 26, and in U.S. Pat. No. 3,799,854 at column 3, lines 13 to 50. In addition, the above curing reaction may be assisted with a tertiary amine catalyst, such as tris-(dimethylaminomethyl)-phenol.

In certain embodiments, the waterborne coating composition is a three component system including a base component, e.g., the epoxy functional polymer, an activator component, e.g., the polyamine, and a thinner component, e.g., water or an aqueous solution. The term "three component system" is known in the art and refers to the separate storage of the base component and activator prior to application. The three components of the mixture may be combined shortly before application to the substrate. For example, the epoxy functional polymer base component and polyamine activator component may be stored separately and mixed just prior to application.

## SOLVENT-BORNE COATING COMPOSITIONS

When organic solvent is used as a diluent, the coating composition may be a solvent-borne coating composition. For example, in certain embodiments, the present invention may comprise solvents, such as ketone, acetate, glycol, alcohol and aromatic solvents. Exemplary suitable solvents are described in U.S. Pat. No. 6,774,168 at col. 3, lines 28 to 41.

In certain embodiments, the solvent-borne coating composition may include a film-forming resin formed from the reaction of a base component (e.g., an epoxy functional polymer) with an activator component (e.g., a polyamine). For example, in certain embodiments, the present invention may comprise epoxy resins such as diglycidyl ethers of bisphenol A, bisphenol F, glycerol, novolacs, and the like. Exemplary suitable polyepoxides are described in U.S. Pat. No. 4,681,811 at col. 5, lines 33 to 58. Additionally, in certain embodiments, the present invention may comprise polyamine curing agents such as aliphatic amine and adducts, cycloaliphatic amines, amidoamines and polyamides. Exemplary suitable polyamines are described in U.S. Pat. No. 4,046,729 at col. 6, line 61 to col. 7, line 26, and in U.S. Pat. No. 3,799,854 at column 3, lines 13 to 50. In addition, the above curing reaction may be assisted with a tertiary amine catalyst, such as tris-(dimethylaminomethyl)-phenol.

For example, the solvent-borne coating composition may be a three component system including a base component, e.g., the epoxy functional polymer, an activator component, e.g., the polyamine, and optionally a thinner component, e.g., a solvent or solvent mixture. However, it is understood that either the base or activator components can include other components, such as pigments or other additives. In use, when ready to apply the coating composition to a substrate, the base component, the activator component and the thinner component are mixed together, applied to the substrate and allowed to cure. As noted above, the coating composition may further include any number of suitable additives in either the base component or activator component.

SUBSTRATES

The present invention is also directed to substrates, such as metal substrates, at least partially coated with a coating composition of the present invention as well as substrates, such as metal substrates, at least partially coated with a multi-component composite coating of the present invention.

In many cases, the coating compositions of the present invention, when deposited onto at least a portion of one metal substrate selected from cold rolled steel, electro-galvanized steel and aluminum and cured, produce a substrate that exhibits corrosion resistance properties greater than the corrosion resistance properties the same substrate exhibits when at least partially coated under the same conditions with a similar coating composition that does not include the previously described corrosion resisting magnesium hydroxide particles. In some cases, the coating compositions of the present invention, when deposited onto at least a portion of two metal substrates selected from cold rolled steel, electro-galvanized steel and aluminum and cured, produce a substrate that exhibits corrosion resistance properties greater than the corrosion resistance properties the same two substrates exhibit when at least partially coated under the same conditions with a similar coating composition that does not include the previously described corrosion resisting magnesium hydroxide particles. In some cases, the coating compositions of the present invention, when deposited onto at least a portion of a cold rolled steel, electro-galvanized steel and aluminum substrate and cured, produce a substrate that exhibits corrosion resistance properties greater than the corrosion resistance properties the same three substrates exhibit when at least partially coated under the same conditions with a similar coating composition that does not include the previously described corrosion resisting magnesium hydroxide particles.

In certain embodiments, the coating compositions of the present invention are in the form of liquid coating compositions, examples of which include aqueous and solvent-based coating compositions, water-borne coating compositions and electrodepositable coating compositions. The coating compositions of the present invention may also be in the form of a co-reactable solid in particulate form, i.e., a powder coating composition. Regardless of the form, the coating compositions of the present invention may be used alone or in combination as primers, basecoats, or topcoats. Certain embodiments of the present invention, as discussion in more detail below, are directed to corrosion resistant primer coating compositions. As used herein, the term "primer coating composition" refers to coating compositions from which an undercoating may be deposited onto a substrate in order to prepare the surface for application of a protective or decorative coating system. Metal substrates that may be coated with such compositions include, for example, substrates comprising steel (including electro-galvanized steel, cold rolled steel, hot-dipped galvanized steel, among others), aluminum, aluminum alloys, zinc-aluminum alloys, and aluminum plated steel. Substrates that may be coated with such compositions also may comprise more than one metal or metal alloy, in that the substrate may be a combination of two or more metal substrates assembled together, such as hot-dipped galvanized steel assembled with aluminum substrates.

The metal substrate primer coating compositions of the present invention may be applied to bare metal. By "bare" is meant a virgin material that has not been treated with any pretreatment compositions, such as, for example, conventional phosphating baths, heavy metal rinses, chemical conversion coating, chromate anodizing, etc. Bare metal may be sand blasted or abraded by mechanical force to improve adhesion to the primer coating. Additionally, bare metal substrates being coated with the primer coating compositions of the present invention may be a cut edge of a substrate that is otherwise treated and/or coated over the rest of its surface.

The metal substrate primer coating compositions of the present invention may be applied to treated metal. By "treated" is meant a virgin material that has been treated with pretreatment compositions, such as, for example, conventional phosphating baths, heavy metal rinses, chemical conversion coating, chromate anodizing, non-chromate surface treatment such as Boegel and PreKote, etc. Additionally, treated metal substrates being coated with the primer coating compositions of the present invention may be a cut edge of a substrate that is otherwise treated and/or coated over the rest of its surface.

Before applying a primer coating composition of the present invention, the metal substrate to be coated may first be cleaned to remove grease, dirt, or other extraneous matter. Conventional cleaning procedures and materials may be employed. These materials could include, for example, mild or strong alkaline cleaners, such as those that are commercially available. Examples include ALK-660, ED-500, both of which are available from PPG Industries, Aerospace Coatings Products. The application of such cleaners may be followed and/or preceded by a water rinse.

The metal surface may then be rinsed with an aqueous acidic solution after cleaning with the alkaline cleaner and before contact with a metal substrate primer coating composition of the present invention. Examples of suitable rinse solutions include mild or strong acidic cleaners, such as the dilute phosphoric acid solutions commercially available. Examples include AC-5, AC-12, both of which are available from PPG Industries, Aerospace Coatings Products.

## ADDITIONAL ADDITIVES

In certain embodiments, the coating compositions of the present invention may also comprise additional optional ingredients, such as those ingredients well known in the art of formulating surface coatings. Such optional ingredients may comprise, for example, pigments, dyes, surface active agents, flow control agents, thixotropic agents, fillers, anti-gassing agents, organic co-solvents, catalysts, antioxidants, light stabilizers, UV absorbers and other customary auxiliaries. Any such additives known in the art can be used, absent compatibility problems. Nonlimiting examples of these materials and suitable amounts include those described in U.S. Pat. No. 4,220,679; 4,403,003; 4,147,769; and 5,071,904. For example, in certain embodiments, the coating compositions of the present invention may comprise pigments and fillers such as titanium dioxide, carbon black, talc, barium sulfate and silica. Exemplary suitable pigments and fillers are described in U.S. Pat. No. 4,220,679 at col. 11, lines 5 to 1 6.

In certain embodiments, the present invention may also comprise alkoxysilane adhesion promoting agents, for example, acryloxyalkoxysilanes, such as $\gamma$-acryloxypropyltrimethoxysilane and methacrylatoalkoxysilane, such as $\gamma$-methacryloxypropyltrimethoxysilane, as well as epoxy-functional silanes, such as $\gamma$-glycidoxypropyltrimethoxysilane. Exemplary suitable alkoxysilanes are described in U.S. Pat. No. 6,774,168 at col. 2, lines 23 to 65.

In certain embodiments, the coating compositions of the present invention also comprise, in addition to the previously described corrosion resisting magnesium hydroxide particles, conventional non-chrome corrosion resisting particles. Suitable conventional non-chrome corrosion resisting particles include, but are not limited to, iron phosphate, zinc phosphate, calcium ion-exchanged silica, colloidal silica, synthetic amorphous silica, and molybdates, such as calcium molybdate, zinc molybdate, barium molybdate, strontium molybdate, and mixtures thereof. Suitable calcium ion-exchanged silica is commercially available from W. R. Grace & Co. as SHIELDEX® AC3 and/or SHIELDEX® C303. Suitable amorphous silica is available from W. R. Grace & Co. under the trade name SYLOID®. Suitable zinc hydroxyl phosphate is commercially available from Elementis Specialties, Inc. under the trade name NALZIN® 2.

In certain embodiments, these particles are present in the coating compositions of the present invention in an amount ranging from 5 to 40 percent by weight, such as 10 to 25 percent, with the percents by weight being based on the total solids weight of the composition.

## MULTI-LAYER COATINGS

As indicated, certain embodiments of the coating compositions of the present invention are directed to primer compositions. In some cases, such compositions are often topcoated with a protective and decorative coating system, such as a monocoat topcoat or a combination of a pigmented base coating composition and a clearcoat composition, i.e., a color-plus-clear system. As a result, the present invention is also directed to multi-component composite coatings comprising at least one coating layer deposited from a coating composition of the present invention. In certain embodiments, the multi-component composite coating compositions of the present invention comprise a base-coat film-forming composition serving as a basecoat (often a pigmented color coat) and a film-forming composition applied over the basecoat serving as a topcoat (often a transparent or clear coat).

In these embodiments of the present invention, the coating composition from which the basecoat and/or topcoat is deposited may comprise, for example, any of the conventional basecoat or topcoat coating compositions known to those skilled in the art of, for example, formulating automotive OEM coating compositions, automotive refinish coating compositions, industrial coating compositions, architectural coating compositions, coil coating compositions, and aerospace coating compositions, among others. Such compositions typically include a film-forming resin that may include, for example, an acrylic polymer, a polyester, and/or a polyurethane. Exemplary film-forming resins are disclosed in U.S. Pat. No. 4,220,679, at col. 2 line 24 to col. 4, line 40; as well as U.S. Pat. No. 4,403,003, U.S. Pat. No. 4,147,679 and U.S. Pat. No. 5,071,904.

## COATING METHODS

The coating compositions of the present invention may be prepared by any of a variety of methods. For example, in certain embodiments, the previously described corrosion resisting magnesium hydroxide particles are added at any time during the formulation of a coating composition comprising a film-forming resin, so long as they form a stable dispersion in a film-forming resin. Coating compositions of the present invention can be prepared by first mixing a film-forming resin, the previously described corrosion resisting particles, pigments, fillers and diluents, such as organic solvents and/or water, dispersing the mixture with a high speed disperser at 1000 to 2000 RPM for 10 to 30 minutes, and then passing the dispersion through a paint mill to achieve grinding fineness of 5 plus as checked with a grinding gauge.

The coating compositions of the present invention may be applied to a substrate by known application techniques, such as dipping or immersion, spraying, intermittent spraying, dipping followed by spraying, spraying followed by dipping, brushing, or by roll-coating. Usual spray techniques and equipment for air spraying and electrostatic spraying, either manual or automatic methods, can be used. While the coating compositions of the present invention can be applied to various substrates, such as wood, glass, cloth, plastic, foam, including elastomeric substrates and the like, in many cases, the substrate comprises a metal.

In certain embodiments of the coating compositions of the present invention, after application of the composition to the substrate, a film is formed on the surface of the substrate by driving solvent, i.e., organic solvent and/or water, out of the film by heating or by an air-drying period. Suitable drying conditions will depend on the particular composition and/or application, but in some instances a drying time of from about 1 to 5 minutes at a temperature of about 80 to 250°F (27 to 121°C) will be sufficient. More than one coating layer may be applied if desired. Usually between coats, the previously applied coat is flashed; that is, exposed to ambient conditions for 5 to 30 minutes. In certain embodiments, the thickness of the coating is from 0.1 to 3 mils (2.5 to 75 microns), such as 0.2 to 2.0 mils (5.0 to 50 microns). The coating composition may then be heated. In the curing operation, solvents are driven off and crosslinkable components of the composition, if any, are crosslinked. The heating and curing operation is sometimes carried out at a temperature in the range of from 80 to 250 °F (27 to 121 °C) but, if needed, lower or higher temperatures may be used.

In certain embodiments of the coating compositions of the present invention, after application of the composition to the substrate, a topcoat is applied on the top of the primer coating compositions in case of multi-layer coating system if desired. Usually between coats, the previously applied coat is flashed; that is, exposed to ambient conditions for 1 to 72 hours, such as 2 to 24 hours. In certain embodiments, the thickness of the topcoat coating is from 0.5 to 4 mils (12.5 to 100 microns), such as 1.0 to 3.0 mils (25 to 75 microns). The coating composition may then be heated. In the curing operation, solvents are driven off and crosslinkable components of the composition, if any, are crosslinked. The heating and curing operation is sometimes carried out at a temperature in the range of from 80 to 250°F (27 to 121°C) but, if needed, lower or higher temperatures may be used.

## CORROSION RESISTANCE

As used herein, the term "corrosion resistance properties" refers to the measurement of corrosion prevention on a metal substrate utilizing the test described in ASTM B-117 (Salt Spray Test). In this test, each panel was inscribed with an "X" after the surface had been coated. The "X" was scribed into the panel's surface to a sufficient depth to penetrate any surface coating and to expose under lying metal. Then the panel was subject to 5% sodium chloride solution evaluated in regular intervals and examined for corrosion at the scribe, blistering, blushing, and other surface defects.

In this application, when it is stated that a coating composition "exhibits corrosion resistance properties greater than" another coating, it means that the coating composition exhibits less darkness in the scribe lines, fewer blisters under the primer coating, less lift of the primer or topcoat and fewer other film defects compared to the other coating. In certain embodiments, the corrosion resisting magnesium hydroxide particles are present in the coating compositions of the present invention in an amount sufficient to result in the exhibition of corrosion resistance properties better than the corrosion resistance properties exhibited by another coating that does not include the corrosion resisting magnesium hydroxide particles. In some embodiments, the corrosion resisting magnesium hydroxide nano particles are present in the coating compositions of the present invention in an amount sufficient to result in the exhibition of corrosion resistance properties better than or equivalent to the corrosion resistance properties exhibited by another coating with a similar coating composition that does not include magnesium hydroxide, but that includes magnesium oxide nano particles (as the control) when coated under the same conditions.

As used herein, the term "the same conditions" means that a coating composition is (i) deposited on the substrate at the same or similar film thickness as the composition to which it is being compared, and (ii) cured under the same or similar cure conditions, such as cure temperature, humidity, and time, as the composition to which it is being compared. As used herein, the term "similar coating composition that does not include the corrosion resisting magnesium hydroxide particles" means that a coating composition contains the same components in the same or similar amounts as the composition to which it is being compared, except that the corrosion resisting magnesium hydroxide particles described herein, which are included in the coating compositions of the present invention, are not present.

In many cases, the coating compositions of the present invention, when deposited onto at least a portion of two metal substrates selected from cold rolled steel, electro-galvanized steel and aluminum and cured, produce a substrate that exhibits corrosion resistance properties similar to, or, in some cases, greater than, the corrosion resistance properties the same two substrates exhibit when at least partially coated under the same conditions with a magnesium oxide nano particles based corrosion-resistant primer coating composition as disclosed in U.S. Patent No. 7,745,010 and U.S. Patent Application Ser. No. 11/956,542.

## CORROSION RESISTING MAGNESIUM HYDROXIDE PARTICLES

The following Suspension Examples and Powder Examples describe the preparation of corrosion resisting magnesium hydroxide particles suitable for use in certain embodiments of the coating compositions of the present invention. Corrosion resisting magnesium hydroxide particles may be synthesized using organic solvent based systems, or aqueous based systems. For example, according to embodiments of the present invention, corrosion resisting magnesium hydroxide particles may be prepared in the form of an acetone suspension. In addition, a powder of corrosion resisting magnesium hydroxide particles may be obtained from the acetone suspension.

According to another embodiment of the present invention, corrosion resisting magnesium hydroxide particles may be prepared in the form of an aqueous suspension. In addition, a powder of corrosion resisting magnesium hydroxide particles may be obtained from the aqueous suspension. Alternatively, a powder of corrosion resisting magnesium hydroxide particles may be obtained from both an acetone suspension and an aqueous suspension.

The following examples are presented for illustrative purposes only and are not to be viewed as limiting the scope of the present invention. Unless otherwise indicated, all parts and percentages in the following examples, as well as throughout the specification, are by weight.

The following Suspension Examples and Powder Examples illustrate the preparation of corrosion resisting magnesium hydroxide nano particles suitable for use in certain embodiments of the coating compositions of the present invention. Table 1 illustrates examples of solvent and aqueous systems of suspended corrosion resisting magnesium hydroxide nano particles. In particular, Table 1 illustrates exemplary embodiments of acetone and aqueous suspensions that include corrosion resisting magnesium hydroxide nano particles according to embodiments of the present invention.

**TABLE 1**

| Example | Notes* | Mean particle size (nm)** |
|---|---|---|
| A | Suspension in acetone | 18 nm; some aggregates of 600 nm and 300 nm |
| B | Suspension in acetone | 22 nm; some aggregates of 80 nm and 1350 nm |
| C | Suspension in acetone | Not Available*** |
| D | Suspension in water | 15 nm; some aggregates of 300 nm, 670 nm, 1300 nm |

* Suspensions were prepared by Brno University of Technology, Czech Republic, and were supplied by Allison Park Coatings Innovation Center, PPG Industries.

** Particle size was measured by the supplier with a Malvern Zetasizer 3000 HS, using powders that were dispersed and measured in distilled water.

*** The particle size of this suspension was not measured by the supplier, and this suspension was not independently tested.

According to embodiments of the present invention, the Suspension Examples described above can be used as the thinner component of a coating composition. Such use of the Suspension Examples is described in further detail below.

Table 2 illustrates examples of corrosion resisting magnesium hydroxide powders that may be obtained from the Suspension Examples A-D described in Table 1. In particular, Table 2 illustrates exemplary embodiments of powders including corrosion resisting magnesium hydroxide particles that were obtained from solvent or aqueous suspensions of corrosion resisting magnesium hydroxide particles.

**TABLE 2**

| Example | Notes | Mean particle size (nm)* |
|---|---|---|
| $A_{dry}$ | Powder from suspension A | bimodal 10 nm and 120 nm; some aggregates of 230 nm and 6,000 nm |
| $B_{dry}$ | Powder from suspension B | bimodal 7 nm and 130 nm; some aggregates of 280 nm |
| $C_{dry}$ | Powder from suspension C | bimodal 5 nm and 68 nm; some aggregates of 330 nm |
| $D_{dry}$ | Powder from suspension D | bimodal 5 nm and 100 nm; some aggregates of 400 nm |
| *Particle size was measured by the supplier with a Malvern Zetasizer 3000 HS, using powders that were dispersed and measured in distilled water. | | |

According to embodiments of the present invention, the Powder Examples described above can be used in a coating composition by adding the Powder to any, or all, of the base, activator, or thinner components of a coating composition. Such use of the Powder Examples is described in further detail below.

The above described corrosion resisting magnesium hydroxide particles may be used in waterborne and solvent borne coating compositions. The corrosion resisting magnesium hydroxide particles exhibit desirable corrosion resistance properties and may be used to improve the corrosion resistance properties of a coating composition. For example, the corrosion resisting magnesium hydroxide particles may be used to improve the corrosion resistance properties of a non-chrome coating composition.

## EXAMPLES

## WATERBORNE NON-CHROMATE CORROSION INHIBITING PRIMER

In some embodiments, the coating composition is a waterborne (WB) coating composition. The WB primer coating composition may include a base component, an activator component and a thinner component. Compositions of various waterborne primer coatings are listed in Table 3. A control primer coating was formulated with magnesium oxide nano particles as a Waterborne Control. Corrosion resistance and adhesion properties of the coatings described in Table 3 were compared to the Waterborne Control as the baseline. As described further below, Comparative Example 1 was formulated without any corrosion inhibitor, Comparative Example 2 was formulated with micro particle size powder magnesium hydroxide (MagChem® MH10), Comparative Example 3 was formulated with micro particle size slurry magnesium hydroxide (FloMag® HUS), and Example 1 was formulated with a suspension of magnesium hydroxide nano particles that was used directly as the thinner component to prepare an exemplary embodiment of the present invention.

**TABLE 3**

| | WB Control | Comparative Example 1 | Comparative Example 2 | Comparative Example 3 | Example 1 |
|---|---|---|---|---|---|
| Base component | Wt (g) | Wt (g) | Wt (g) | Wt (g) | Wt (g) |
| Prox® E-143 | 5.27 | 5.27 | 5.27 | 5.27 | 5.27 |
| D.E.N.™ 431 | 21.39 | 21.39 | 21.39 | 21.39 | 21.39 |
| Dowanol™ PnB | 0.85 | 0.85 | 0.85 | 0.85 | 0.85 |
| Ti-Pure® R-900 | 9.98 | 9.98 | 9.98 | 9.98 | 9.98 |
| Raven 14 | 0.02 | 0.02 | 0.02 | 0.02 | 0.02 |
| Nicron® 554 | 13.68 | 13.68 | 13.68 | 13.68 | 13.68 |
| DI Water | 48.81 | 48.81 | 48.81 | 48.81 | 48.81 |
| | | | | | |
| Activator component | | | | | |
| Ancamine® 1895 | 8.20 | 9.75 | 8.20 | 9.75 | 9.75 |

(continued)

| Activator component | | | | | |
|---|---|---|---|---|---|
| Dowanol™ PM | 3.06 | 3.31 | 3.06 | 3.31 | 3.31 |
| Downaol™ PnB | 4.22 | 4.56 | 4.22 | 4.56 | 4.56 |
| Dow Corning® Z-6121 | 1.96 | 1.65 | 1.96 | 1.65 | 1.65 |
| Butanol | 1.53 | 2.12 | 1.53 | 2.12 | 2.12 |
| Nano MgO[1] | 6.17 | 0.00 | 0.00 | 0.00 | 0.00 |
| MagChem® MH10[2] | 0.00 | 0.00 | 6.17 | 0.00 | 0.00 |
| | | | | | |
| Thinner component | | | | | |
| DI water | 34.21 | 34.21 | 34.21 | 0.00 | 0.00 |
| FloMag® HUS (61% solids)[3] | 0.00 | 0.00 | 0.00 | 52.55 | 0.00 |
| Suspension D (85% solids)[4] | 0.00 | 0.00 | 0.00 | 0.00 | 100.00 |
| Total | 160.18 | 155.61 | 160.18 | 173.95 | 209.21 |
| Total solid | 61.27 | 55.76 | 61.27 | 87.82 | 130.83 |
| Percent of corrosion inhibitor | 10.07 | 0.00 | 10.07 | 36.87 | 57.38 |

Notes:
[1]Nano magnesium oxide received from Nanostructured & Amorphous Materials, 100% solids, average particle size is 20 nm.
[2]MagChem® MH10, average particle size is 4 microns.
[3]FloMag® HUS (61% solids), average particle size is 3 microns.
[4]Suspension D (85% solids), average particle size is 15 nm with some aggregates of 300 nm, 670 nm, and 1300 nm.

The components of the above-described coatings were obtained from the following sources:

| Component | Description | Supplier |
|---|---|---|
| D.E.N.™ 431 | Epoxy resin | Dow Chemical |
| Prox® E-143 | Epoxy resin | Protex International |
| Ancamine® 1895 | Polyamine curing agent | Air Products |
| Dow Corning® Z-6121 | Amino silane | Dow Corning |
| | | |
| Ti-Pure® R-900 | Titanium dioxide | DuPont |
| Raven 14 | Carbon black | Columbian Chemicals Company |
| Nicron® 554 | Talc | Luzenac® |
| nano Magnesium oxide | Magnesium oxide | Nanostructured & Amorphous Materials |
| MagChem® MH10 | Magnesium hydroxide powder | Martin Marietta Magnesia Specialties |
| FlowMag® HUS | Magnesium hydroxide slurry | Martin Marietta Magnesia Specialties |

(continued)

| Component | Description | Supplier |
|---|---|---|
| | | |
| Butanol | Solvent | Sigma-Aldrich |
| Dowanol™ PnB | Solvent | Dow Chemical |
| Dowanol™ PM | Solvent | Dow Chemical |
| DI water | Solvent | |

**Waterborne Control (nano MgO):**

A primer coating composition including a base component, an activator component including magnesium oxide, and a thinner component were combined. The base component was formulated with epoxy resin, dispersing agents, pigments and water. The activator component was formulated with 10.0 percent by weight of magnesium oxide particles based on the total solids weight of the coating composition with an average particle size of 20 nm (Commercially available from Nanostructured & Amorphous Materials). The thinner component is water. The thinner component was added after hand mixing of the base component and the activator component.

**Comparative Example 1**

A coating composition not including any corrosion resisting particles (such as magnesium oxide or magnesium hydroxide) was formulated. The thinner component was added after hand mixing of base component and the activator component.

**Comparative Example 2**

A coating composition including micro powder magnesium hydroxide (MagChem® MH10, available from Martin Marietta Magnesia Specialties, LLC) was formulated. The average particle size of MagChem® MH10 was 4 microns. The weight percent of the micro magnesium hydroxide particles was 10.07 in the coating composition based on the total weight of the coating composition. The thinner component was added after hand mixing of the base component and the activator component.

**Comparative Example 3**

A coating composition including micro slurry magnesium hydroxide (FloMag® HUS, available from Martin Marietta Magnesia Specialties LLC) was formulated. The average particle size of MagChem® MH10 was 3 microns. The weight percent of the micro magnesium hydroxide particles was 36.87 in the coating composition based on the total weight of the coating composition. The slurry was used as the thinner component and was added after hand mixing of the base component and the activator component.

**Example 1**

An example primer coating composition according to embodiments of the present invention was prepared by combining a base component, an activator component, and a thinner component. The thinner component included the inventive corrosion resisting magnesium hydroxide particles of Suspension Example D. The average particle size of Suspension Example D was 15 nm with some aggregates of 300 nm, 670 nm, and 1300 nm. The weight percent of the micro magnesium hydroxide particles was 57.38 in the coating composition based on the total weight of the coating composition. The Suspension Example D was used as the thinner component and was added after hand mixing of the base component and the activator component.

All waterborne primer coatings were applied to scotch-brite™ abraded clad aluminum panels (Clad: AMS 2024-T3, 250/5). Each clad aluminum panel was abraded with 3M scotch-brite™ and cleaned with methyl ethyl ketone to form a water-free surface. The primer coating compositions were sprayed with an HVLP spray gun to a dry film thickness of 0.8 mils to 1.5 mils (20 to 37.5 microns). Another set of panels were topcoated with gloss polyurethane topcoat (CA8201/F17925 topcoat available from PPG Industries, PPG Aerospace Products). The topcoat was applied after drying the primer at ambient temperature conditions for 2 hours. The dry film thickness of the polyurethane topcoat was 1.5 mils to 2.5 mils (37.5 to 62.5 microns). Both the primed and topcoated panels were allowed to completely cure for one week at ambient conditions and then tested for dry adhesion according to Boeing Specification Standard (BSS) 7225, class 5. Wet adhesion was tested, with the same method, after being immersed for seven days in de-ionized water at ambient temperature. Adhesion was evaluated with a rating scale from 1-10, with 10 indicating the best adhesion and 0 indicating the worst adhesion. For the corrosion resistance test, primered and topcoated panels were inscribed with an "X" that was scribed into the panel's surface to a sufficient depth to penetrate any surface coating and to expose the underlying metal. Then, the panel was subjected to a 5% sodium chloride solution according to ASTM B-117 and evaluated after 500 hours, 1000 hours, 2,000 hours and 3,000 hours for corrosion at the scribe, blistering, blushing, and other surface defects. Results of the adhesion and corrosion resistance of the primer coating and the primer coating with a polyurethane topcoat on a clad aluminum substrate are shown in Table 4.

**TABLE 4**

| | Adhesion* | Corrosion** | | | |
|---|---|---|---|---|---|
| Primer Only | | 500 hours | 1000 hours | 2000 hours | 3000 hours |
| Waterborne Control | 10/10 | 1a, 8, 13 | 1a, 8, 13 | 1b, 8, 13 | 1b, 9, 13 |
| Comparative Example 1 | 10/10 | 3, 4, 9, 14 | 3, 4, 9, 14 | 4, 7, 9, 14 | NA**** |
| Comparative Example 2 | 9/9 | 1a | 1a | 2, 5, 8, 10, 12, 13 | NA |
| Comparative Example 3 | 10/9 | 1a | 1a | 2, 4, 9, 10, 13 | NA |
| Example 1 | 10/10 | 1a, 8, 13 | 1b, 8, 13 | 1b, 9, 13 | 1b, 9, 13 |
| | | | | | |
| Primer plus topcoat | | | | | |
| Waterborne Control | 10/10 | 2, 4, 8 | 3, 4, 9 | 3, 4, 9 | 3,4,9 |
| Comparative Example 1 | 10/8 | 3, 4, 9, 13 | 4, 7, 9, 13 | 4, 7, 9, 14 | NA |
| Comparative Example 2 | 9/8 | 1a | 1a, 9 | 3, 4, 9, C*** | NA |
| Comparative Example 3 | 9/9 | 1a, 8 | 1a, 8 | 1a, 9, 13 | NA |
| Example 1 | 10/9 | 2, 4 | 3, 4, 8 | 3, 4, 9 | 3, 4, 9 |
| *The first number represents the dry adhesion rating and the second number represents the wet adhesion rating. **Creepage rating: A ***Creepage rating: C. Only this panel showed a creepage rating of C, and the rest of the test panels exhibited a rating of A. ****NA: Salt-fog test for comparative examples 1, 2 and 3 was discontinued at 2,000 hours. | | | | | |

Corrosion resistance legend: 1a: scribe line shiny; 1b: scribe line beginning to darken; 2: scribe line >50% darkened; 3: scribe line dark; 4: several localized sites of white salt in scribe lines; 5: many localized sites of white salt in scribe lines; 6: white salt filling scribe lines; 7: dark corrosion sites in scribe lines; 8: few blisters under primer along scribe line (less than 12 blisters); 9: many blisters under primer along scribe line; 10: slight lift along scribe lines; 11: coating curling up along scribe; 12: pin point sites/pits of corrosion on organic coating surface; 13: one or more blisters on surface away from scribe; 14: many blisters under primer away from scribe; 15: starting to blister over surface; Creepage Rating: A: no creepage; B: 0 to 1/64; C: 1/64 to 1/32; D: 1/32 to 1/16; E: 1/16 to 1/8; F: 1/8 to 3/16; G3/16 to 1/4; H: 1/4 to 3/8 inches.

The results in Table 4 show that all of the primer coatings displayed excellent dry and wet adhesion to the clad aluminum substrate. In addition, the topcoat is compatible with all of the primer coatings and shows excellent adhesion to the primer.

As can be seen from the results in Table 4, Comparative Example 1, which does not contain any corrosion inhibitor, exhibited significantly more corrosion after 500 hours of salt-fog exposure. Comparative Examples 2 and 3, which included micron sized magnesium hydroxide particles, exhibited excellent corrosion resistance after 1000 hours of salt-fog exposure. However, further exposure to the salt-fog revealed that Comparative Examples 2 and 3 had inferior corrosion resistance as compared to the waterborne control and the inventive primer coating Example 1, as checked at 2,000 hours. At 3,000 hours, inventive Example 1 exhibited the same corrosion resistance as the waterborne control, when coated with primer only or with the primer and topcoat.

As such, the corrosion resisting magnesium hydroxide particles of the present invention, having an average primary particle size of less than 200 nm, provide unexpected and desirable results over magnesium hydroxide particles having an average primary particle size in the micron size range. Additionally, the present inventors have surprisingly discovered that the primer coating composition with the inventive magnesium hydroxide particles exhibited the same corrosion resistance to the primer formulated with magnesium oxide nano particles. Therefore, the inventive magnesium hydroxide particles can be utilized as a corrosion inhibitor replacement for magnesium oxide nano particles. The corrosion resisting magnesium hydroxide particles are a novel and non-toxic alternative to nano magnesium oxide in replacing chromate, cerium and other heavy metal compounds as a non-chromate corrosion inhibitor.

## SOLVENT BORNE NON-CHROMATE CORROSION INHIBITING (NCCI) PRIMER INCLUDING CORROSION RESISTING MAGNESIUM HYDROXIDE PARTICLES

The solvent-borne primer coating composition includes a base component, an activator component and a thinner component. The base component includes polyamine resins, solvents, pigments and fillers, and corrosion inhibitors. The activator component includes epoxy resins and solvents, and the thinner component includes a solvent or a mixture of solvents.

As disclosed in U.S. Patent No. 7,745,010 and U.S. Patent Application Ser. No. 11/956542, magnesium oxide nano particles exhibited corrosion resistance comparable to chromate pigments. Therefore, coating compositions including nano magnesium oxide particles was utilized as a control. Four primer coating compositions including the inventive magnesium hydroxide particles as described in Table 2 were formulated. As can be seen from the data listed in Table 5, the same amount of corrosion inhibitor was used for all of the primer coating compositions. The weight percent of the corrosion inhibitor was 8.67 based on the total weight of the coating composition. For comparison, the same amount of the activator and the thinner was added to the base components.

## Solvent-borne Control

The control example was formulated with magnesium oxide nano particles having an average particle size of 20 nm (Commercially available from Nanostructured & Amorphous Materials) in the base component.

## Example 2

An example primer coating composition according to exemplary embodiments of the present invention was prepared by including the inventive magnesium hydroxide particles (prepared as $A_{dry}$ powder in Table 2) in the base component. The particle size of the magnesium hydroxide particles of $A_{dry}$ powder was a bimodal distribution of 10 nm and 120 nm, with some aggregates of 230 nm and 6,000 nm.

## Example 3

An example primer coating composition according to exemplary embodiments of the present invention was prepared by including the inventive magnesium hydroxide particles (prepared as $B_{dry}$ powder in Table 2) in the base component. The particle size of the magnesium hydroxide particles of $B_{dry}$ powder was a bimodal distribution of 7 nm and 130 nm, with some aggregates of 280 nm.

## Example 4

An example primer coating composition according to exemplary embodiments of the present invention was prepared by including the inventive magnesium hydroxide particles (prepared as $C_{dry}$ powder in Table 2) in the base component. The particle size of the magnesium hydroxide particles of $C_{dry}$ powder was a bimodal distribution of 5 nm and 68 nm, with some aggregates of 330 nm.

## Example 5

An example primer coating composition according to exemplary embodiments of the present invention was prepared by including the inventive magnesium hydroxide particles (prepared as $D_{dry}$ powder in Table 2) in the base component. The particle size of the magnesium hydroxide particles of $D_{dry}$ powder was a bimodal distribution of 5 nm and 100 nm, with some aggregates of 400 nm.

**TABLE 5**

| | SB Control | Example 2 | Example 3 | Example 4 | Example 5 |
|---|---|---|---|---|---|
| Base component | Wt (g) | Wt (g) | Wt (g) | Wt (g) | Wt (g) |
| Ancamide® 2569 | 11.90 | 11.90 | 11.90 | 11.90 | 11.90 |
| Ancamine® 2432 | 7.93 | 7.93 | 7.93 | 7.93 | 7.93 |
| Ancamine® K54 | 0.71 | 0.71 | 0.71 | 0.71 | 0.71 |
| Butanol | 20.32 | 20.32 | 20.32 | 20.32 | 20.32 |
| Xylene | 3.69 | 3.69 | 3.69 | 3.69 | 3.69 |
| Ti-Pure® R-706 | 10.41 | 10.41 | 10.41 | 10.41 | 10.41 |
| Raven 14 | 0.05 | 0.05 | 0.05 | 0.05 | 0.05 |
| Blanc Fixe Micro | 15.86 | 15.86 | 15.86 | 15.86 | 15.86 |
| Min-U-Sil® 5 | 20.25 | 20.25 | 20.25 | 20.25 | 20.25 |
| Nano MgO[1] | 8.92 | | | | |
| Adry | | 8.92 | | | |
| Bdry | | | 8.92 | | |
| Cdry | | | | 8.92 | |
| Ddry | | | | | 8.92 |
| | | | | | |
| Activator component | | | | | |
| Epon® 828 | 23.25 | 23.25 | 23.25 | 23.25 | 23.25 |
| Epon® 8111 | 3.79 | 3.79 | 3.79 | 3.79 | 3.79 |
| Xylene | 8.58 | 8.58 | 8.58 | 8.58 | 8.58 |
| Silquest® A-187 | 0.68 | 0.68 | 0.68 | 0.68 | 0.68 |
| Bentone® SD-2 | 0.38 | 0.38 | 0.38 | 0.38 | 0.38 |
| Oxsol® 100 | 43.26 | 43.26 | 43.26 | 43.26 | 43.26 |
| | | | | | |
| Thinner component | | | | | |
| Acetone | 5.69 | 5.69 | 5.69 | 5.69 | 5.69 |
| Oxsol® 100 | 13.29 | 13.29 | 13.29 | 13.29 | 13.29 |
| | | | | | |
| Total weight | 198.92 | 198.92 | 198.92 | 198.92 | 198.92 |
| Total solid weight | 102.89 | 102.89 | 102.89 | 102.89 | 102.89 |
| Percentage of corrosion pigment | 8.67 | 8.67 | 8.67 | 8.67 | 8.67 |
| Notes:<br>[1]Nano magnesium oxide received from Nanostructured & Amorphous Materials, 100% solids, average particle size is 20 nm. | | | | | |

The components of the above-described coatings were obtained from the following sources:

| Component | Description | Supplier |
|---|---|---|
| Epon® 828 | Epoxy resin | Momentive Performance Materials |

(continued)

| Component | Description | Supplier |
|---|---|---|
| Epon® 8111 | Epoxy resin | Momentive Performance Materials |
| Silquest® A-187 | Epoxy silane | Momentive Performance Materials |
| Ancamide® 2569 | Polyamine curing agent | Air Products |
| Ancamine® 2432 | Polyamine curing agent | Air Products |
| Ancamine® K54 | Tertiary amine catalyst | Air Products |
| | | |
| Ti-Pure® R-706 | Titanium dioxide | DuPont |
| Raven 14 | Carbon black | Columbian Chemicals Company |
| Blanc Fixe Micro | Barium sulfate pigment | Sachtleben |
| Min-U-Sil® 5 | Ground silica | Western Reserve Chemical |
| Bentone® SD-2 | Clay | Elementis Specialties |
| nano MgO | Magnesium oxide | Nanostructured & Amorphous Materials |
| MagChem® MH10 | Magnesium hydroxide powder | Martin Marietta Magnesia Specialties |
| FlowMag® HUS | Magnesium hydroxide slurry | Martin Marietta Magnesia Specialties |
| | | |
| Butanol | Solvent | Sigma-Aldrich |
| Xylene | Solvent | Sigma-Aldrich |
| Oxsol® 100 | Solvent | Kowa American Company |
| Acetone | Solvent | Sigma-Aldrich |

All solvent-borne primer coatings were applied to scotch-brite™ abraded clad and bare (Clad: AMS 2024-T3, 250/5; Bare: AMS 2024-T3, 250/4) aluminum panels. The clad and bare aluminum panels were abraded with 3M scotch-brite™ and cleaned with methyl ethyl ketone to form a water-free surface. The primer coating compositions were sprayed with an HVLP spray gun to a dry film thickness of 0.8 mils to 1.5 mils (20 to 37.5 microns). Another set of panels were topcoated with a gloss polyurethane topcoat (CA8201/F17925 topcoat available from PPG Industries, PPG Aerospace Products). The topcoat was applied after drying the primer at ambient temperature conditions for 2 hours. The dry film thickness of the polyurethane topcoat was 1.5 mils to 2.5 mils (37.5 to 62.5 microns). Both the primed and topcoated panels were allowed to completely cure for one week at ambient conditions and were then tested for dry adhesion according to Boeing Specification Standard (BSS) 7225, class 5. Wet adhesion was tested with the same method after being immersed for seven days in de-ionized water at ambient temperature. Adhesion was evaluated with a rating scale from 1-10, with 10 indicating the best adhesion and 0 indicating the worst adhesion. For the corrosion resistance test, primered and topcoated panels were inscribed with an "X" that was scribed into the panel's surface to a sufficient depth to penetrate any surface coating and to expose the under lying metal. Then the panel was subjected to a 5% sodium chloride solution according to ASTM B-117 and evaluated after 500 hours, 1000 hours, 2,000 hours and 3,000 hours for corrosion at the scribe, blistering, blushing, and other surface defects. Results of the adhesion and corrosion resistance of the primer coating and the primer coating with polyurethane topcoat on clad aluminum substrates are shown in Table 6. Results of the adhesion and corrosion resistance of the primer coating and the primer coating with polyurethane topcoat on bare aluminum substrates are shown in Table 7.

**TABLE 6**

| Primer Only | Adhesion* | Corrosion** | | | |
|---|---|---|---|---|---|
| | | 500 hours | 1000 hours | 2000 hours | 3000 hours |
| SB Control | 10/9 | 2, 4, 9, 14 | 2, 4, 9, 14 | 2, 4, 9, 14 | 3, 4, 10, 15 |
| 2 | 10/8 | 1b, 4, 8, 13 | 1b, 4, 8, 13 | 1b, 4, 8, 13 | 3, 4, 9, 13 |

(continued)

|  | Adhesion* | Corrosion** | | | |
|---|---|---|---|---|---|
| Primer Only | | 500 hours | 1000 hours | 2000 hours | 3000 hours |
| 3 | 10/9 | 1b, 4, 9 | 1b, 4, 9 | 1b, 5, 9 | 3, 5, 9 |
| 4 | 10/6 | 1b, 4, 8, 13 | 1b, 4, 8, 13 | 1b, 4, 8, 13 | 2, 4, 9, 14 |
| 5 | 10/9 | 1b, 4, 9, 13 | 1b, 4, 9, 13 | 1b, 4, 9, 13 | 2,4,9, 10, 13 |
|  | | | | | |
| Primer + topcoat | | | | | |
| SB Control | 8/8 | 2, 4, 8, 13 | 2, 4, 8, 13 | 3, 4, 9, 13 | 3, 4, 9, 13 |
| 2 | 8/8 | 3, 4, 9 | 3, 4, 9 | 3, 4, 9 | 4, 7, 9, 10 |
| 3 | 10/7 | 3, 4, 9, 13 | 3, 4, 9, 13 | 3, 4, 9, 13 | 3, 4, 9, 10, 13 |
| 4 | 9/8 | 3, 4, 8 | 3, 4, 8 | 3, 4, 9 | 3, 4, 9, 13 |
| 5 | 10/8 | 3, 4, 9, 13 | 3, 4, 9, 13 | 3, 4, 9, 13 | 3, 4, 9, 13 |

*The first number represents rating dry adhesion and the second one for wet adhesion.
**Creepage rating: A for all examples.

**TABLE 7**

|  | Adhesion* | Corrosion** | | | |
|---|---|---|---|---|---|
| Primer Only | | 500 hours | 1000 hours | 2000 hours | 3000 hours |
| SB Control | 9/7 | 1b, 4, 8, 13 | 2, 4, 8, 13 | 2, 5, 8, 13 | 3, 4, 9, 14 |
| 2 | 9/8 | 1b, 4, 8, 13 | 1b, 4, 8, 13 | 2, 5, 8, 13 | 3, 4, 9, 14 |
| 3 | 7/8 | 1b, 5, 8, 13 | 1b, 5, 8, 13 | 2, 5, 8, 13 | 3, 4, 9, 14 |
| 4 | 9/9 | 1b, 4, 8, 14 | 1b, 4, 8, 14 | 1b, 4, 15 | 2, 4, 15 |
| 5 | 9/9 | 1b, 5, 8, 13 | 1b, 5, 8, 13 | 1b, 5, 8, 13 | 3, 4, 9, 14 |
|  | | | | | |
| Primer + topcoat | | | | | |
| SB Control | 9/8 | 1b, 4, 8, 13 | 2, 4, 8, 13 | 3, 5, 8, 13 | 4, 7, 9, 10, 13 |
| 2 | 8/8 | 3, 5, 8 | 3, 5, 9, 13 | 3, 5, 9, 13 | 5, 7, 9, 10, 14 |
| 3 | 7/7 | 2, 5, 8, 13 | 3, 5, 8, 13 | 3, 5, 9, 13 | 5, 7, 9, 10, 13 |
| 4 | 7/8 | 3, 4, 8 | 3, 5, 8, 13 | 3, 5, 8, 13 | 3, 5, 8, 13 |
| 5 | 7/7 | 3, 5, 8, 13 | 3, 5, 8, 13 | 3, 5, 9, 13 | 3, 4, 9, 13 |

*The first number represents rating dry adhesion and the second one for wet adhesion.
**Creepage rating: A for all examples.

As can be seen from the adhesion results presented in Tables 6 and 7, all of the inventive samples and the solvent-borne control exhibited excellent dry and wet adhesion to the bare and clad aluminum substrates. When topcoated, both the inventive samples and the solvent-borne control exhibited slight deteriorations in adhesion as compared to the primer only panels. From all of the adhesion data in Tables 6 and 7, it can be seen that the overall adhesion of the inventive primer coating compositions is the same as that of the solvent-borne control.

As can be seen from the corrosion resistance results presented in Tables 6 and 7, on both the bare and clad aluminum substrates, the inventive primer samples exhibited the same corrosion resistance as the solvent-borne control after 500 hours, 1,000 hours, 2,000 hours and 3,000 hours of salt-fog exposure. When topcoated with the polyurethane coating, the inventive primer coating composition exhibited the same corrosion resistance as the solvent-borne control.

The above described corrosion resisting particles may be used in waterborne and solvent borne coating compositions. The corrosion resisting magnesium hydroxide particles exhibit desirable corrosion resistance properties and may be used to improve the corrosion resistance properties of a coating composition. For example, the corrosion resisting magnesium hydroxide particles may be used to improve the corrosion resistance properties of a non-chrome coating composition.

The present inventors have surprisingly discovered that coating compositions that include the above described corrosion resisting magnesium hydroxide particles exhibit desirable corrosion resistance properties even though magnesium hydroxide is not hygroscopic. In contrast to the present invention, certain previous non-chrome coating compositions were understood to derive their corrosion resistant properties from the presence of water scavenging (e.g., hygroscopic) inorganic oxides. Those previous water scavenging inorganic oxides were understood to protect the substrate from corrosion through the uptake of water, thereby reducing the amount of water that contacts the substrate. Because magnesium hydroxide is not hygroscopic, those of ordinary skill in the art at the time the invention was made would not have expected magnesium hydroxide to possess any mechanism for reducing the amount of water that contacts the substrate, and therefore would not have expected magnesium hydroxide to be a suitable replacement for previous water scavenging inorganic oxides. Consequently, those of ordinary skill in the art at the time the invention was made would not have expected coating compositions including the above described magnesium hydroxide particles to exhibit desirable corrosion resistance and would have had no reason to try coating compositions including the above described magnesium hydroxide particles.

More specifically, it has been surprisingly discovered that coating compositions including the inventive magnesium hydroxide particles of less than 200 nm exhibited good adhesion and good corrosion resistance on metal substrates, such as aluminum substrates, even after 3000 hours of salt-fog exposure. The novel, inventive coating compositions demonstrated the same properties as those of the magnesium oxide nano particles and provided another alternative to coating compositions that include chromates, cerium and other heavy metals, as the present coating compositions are environmentally safe.

For purposes of the preceding detailed description, it is to be understood that the invention may assume various alternative variations, except where expressly specified to the contrary. Moreover, other than in any operating examples, or where otherwise indicated, all numbers expressing, for example, quantities of ingredients used in the specification and claims are to be understood as being modified in all instances by the term "about". Accordingly, unless indicated to the contrary, the numerical parameters set forth in the following specification and attached claims are approximations that may vary depending upon the desired properties to be obtained by the present invention. At the very least, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In this application, the use of the singular includes the plural and plural encompasses singular, unless specifically stated otherwise. For example, and without limitation, this application refers to coating compositions that, in certain embodiments, comprise a "film-forming resin." Such references to "a film-forming resin" are meant to encompass coating compositions comprising one film-forming resin as well as coating compositions that comprise a mixture of two or more film-forming resins. In addition, in this application, the use of "or" means "and/or" unless specifically stated otherwise, even though "and/or" may be explicitly used in certain instances.

In certain embodiments, the present invention is directed to coating compositions that are substantially free of chromium containing material. In other embodiments, the coating compositions of the present invention are completely free of such a material. As used herein, the term "substantially free" means that the material being discussed is present in the composition, if at all, as an incidental impurity. In other words, the material does not affect the properties of the composition. This means that, in certain embodiments of the present invention, the coating composition contains less than 2 weight percent of chromium containing material or, in some cases, less than 0.05 weight percent of chromium containing material, wherein such weight percents are based on the total weight of the composition. As used herein, the term "completely free" means that the material is not present in the composition at all. Thus, certain embodiments of the coating compositions of the present invention contain no chromium-containing material. As used herein, the term "chromium containing material" refers to materials that include a chromium trioxide group, $CrO_3$. Examples of such materials include chromic acid, chromium trioxide, chromic acid anhydride, dichromate salts, such as ammonium dichromate, sodium dichromate, potassium dichromate, and calcium, barium, magnesium, zinc, cadmium, and strontium dichromate.

Certain embodiments of the coating compositions of the present invention are substantially free of other undesirable materials, including heavy metals, such as lead and nickel. In certain embodiments, the coating compositions of the present invention are completely free of such materials.

The present invention has been described with reference to exemplary embodiments and aspects. Persons skilled in the art will appreciate that other modifications and applications can be made. For example, although the coating compositions are described as being useful for aerospace or aviation fuel tank applications, they may be useful for other applications as well.

**Claims**

1. A coating composition comprising nano magnesium hydroxide particles having an average primary particle size of less than 200 nm as determined by transmission electron microscopy.

2. The coating composition of claim 1, wherein the coating composition further comprises a thermosetting film-forming resin formed from the reaction of a polyamine with an epoxy functional polymer.

3. The coating composition of claim 2, wherein the polyamine comprises a polyamide resin.

4. The coating composition of claim 1, wherein the coating composition comprises corrosion resisting magnesium hydroxide particles having an average primary particle size of less than 150 nm as determined by transmission electron microscopy.

5. The coating composition of claim 1, further comprising an adhesion promoting component.

6. The coating composition of claim 1, wherein the coating composition comprises corrosion resisting magnesium hydroxide particles consisting essentially of magnesium hydroxide particles.

7. The coating composition of claim 2, wherein the thermosetting film-forming resin comprises corrosion resisting magnesium hydroxide particles prior to curing.

8. A substrate comprising a coating composition comprising nano magnesium hydroxide particles having an average primary particle size of less than 200 nm as determined by transmission electron microscopy.

9. The substrate of claim 8, wherein the coating composition further comprises a thermoset film-forming resin that is the reaction product of a polyamine and an epoxy functional polymer.

10. The substrate of claim 8, wherein the coating composition comprises corrosion resisting magnesium hydroxide particles having an average primary particle size of less than 150 nm as determined by transmission electron microscopy.

11. The substrate of claim 8, wherein the substrate is clad with pure aluminum or further comprises a chromate conversion coating.

**Patentansprüche**

1. Eine Beschichtungszusammensetzung umfassend Magnesiumhydroxid-Nanopartikel mit einer durchschnittlichen Primärpartikelgröße von weniger als 200 nm, wie durch Transmissionselektronenmikroskopie bestimmt.

2. Die Beschichtungszusammensetzung des Anspruchs 1, wobei die Beschichtungszusammensetzung des Weiteren ein duroplastisches filmbildendes Harz, gebildet aus der Reaktion eines Polyamins mit einem epoxyfunktionellen Polymer, umfasst.

3. Die Beschichtungszusammensetzung des Anspruchs 2, wobei das Polyamin ein Polyamidharz umfasst.

4. Die Beschichtungszusammensetzung des Anspruchs 1, wobei die Beschichtungszusammensetzung korrosionsbe-

**EP 2 718 356 B1**

ständige Magnesiumhydroxidpartikel mit einer durchschnittlichen Primärpartikelgröße von weniger als 150 nm, wie durch Transmissionselektronenmikroskopie bestimmt, umfasst.

5. Die Beschichtungszusammensetzung des Anspruchs 1 umfassend des Weiteren eine haftvermittelnde Komponente.

6. Die Beschichtungszusammensetzung des Anspruchs 1, wobei die Beschichtungszusammensetzung korrosionsbeständige Magnesiumhydroxidpartikel bestehend im Wesentlichen aus Magensiumhydroxidpartikeln umfasst.

7. Die Beschichtungszusammensetzung des Anspruchs 2, wobei das duroplastische filmbildende Harz vor dem Härten korrosionsbeständige Magnesiumhydroxidpartikel umfasst.

8. Ein Substrat umfassend eine Beschichtungszusammensetzung umfassend Magnesiumhydroxid-Nanopartikel mit einer durchschnittlichen Primärpartikelgröße von weniger als 200 nm, wie durch Transmissionselektronenmikroskopie bestimmt.

9. Das Substrat des Anspruchs 8, wobei die Beschichtungszusammensetzung des Weiteren ein duroplastisches filmbildendes Harz, welches das Reaktionsprodukt eines Polyamins und eines epoxyfunktionellen Polymers ist, umfasst.

10. Das Substrat des Anspruchs 8, wobei die Beschichtungszusammensetzung korrosionsbeständige Magnesiumhydroxidpartikel mit einer durchschnittlichen Primärpartikelgröße von weniger als 150 nm, wie durch Transmissionselektronenmikroskopie bestimmt, umfasst.

11. Das Substrat des Anspruchs 8, wobei das Substrat mit reinem Aluminium plattiert ist oder des Weiteren eine Chromatkonversionsbeschichtung umfasst.

## Revendications

1. Composition de revêtement comprenant des nanoparticules d'hydroxyde de magnésium qui présentent une taille moyenne de particules primaires, déterminée par microscopie électronique en transmission, de moins de 200 nm.

2. Composition de revêtement conforme à la revendication 1, laquelle composition de revêtement comprend en outre une résine filmogène thermodurcissable, formée par réaction d'une polyamine avec un polymère à fonctions époxy.

3. Composition de revêtement conforme à la revendication 2, dans laquelle la polyamine comprend une résine polyamide.

4. Composition de revêtement conforme à la revendication 1, laquelle composition de revêtement comprend des particules d'hydroxyde de magnésium résistantes à la corrosion, qui présentent une taille moyenne de particules primaires, déterminée par microscopie électronique en transmission, de moins de 150 nm.

5. Composition de revêtement conforme à la revendication 1, qui comprend en outre un composant promoteur d'adhésion.

6. Composition de revêtement conforme à la revendication 1, laquelle composition de revêtement comprend des particules d'hydroxyde de magnésium résistantes à la corrosion, qui consistent essentiellement en des particules d'hydroxyde de magnésium.

7. Composition de revêtement conforme à la revendication 2, dans laquelle la résine filmogène thermodurcissable comprend, avant durcissement, des particules d'hydroxyde de magnésium résistantes à la corrosion.

8. Substrat comportant une composition de revêtement comprenant des nanoparticules d'hydroxyde de magnésium qui présentent une taille moyenne de particules primaires, déterminée par microscopie électronique en transmission, de moins de 200 nm

9. Substrat conforme à la revendication 8, dans lequel la composition de revêtement comprend en outre une résine filmogène thermodurcie, qui est le produit de réaction d'une polyamine et d'un polymère à fonctions époxy.

**10.** Substrat conforme à la revendication 8, dans lequel la composition de revêtement comprend des particules d'hydroxyde de magnésium résistantes à la corrosion, qui présentent une taille moyenne de particules primaires, déterminée par microscopie électronique en transmission, de moins de 150 nm.

**11.** Substrat conforme à la revendication 8, lequel substrat est revêtu d'aluminium pur ou comprend en outre un revêtement obtenu par chromatation.

**EP 2 718 356 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7745010 B
- US 956542 A
- US 11213136 A
- US 11213136 B
- US 4681811 A
- US 4046729 A
- US 3799854 A
- US 6774168 B
- US 4220679 A
- US 4403003 A
- US 4147769 A
- US 5071904 A
- US 4147679 A

### Non-patent literature cited in the description

- *The Journal of the American Chemical Society,* 1938, vol. 60, 309
- Surface Coatings. **HAWLEY, GESSNER G.** The Condensed Chemical Dictionary. Oil and Colour Chemists' Association, 1974, vol. 2, 856
- **SAUNDERS, K. J.** Organic Polymer Chemistry. Chapman and Hall, 1973, 41-42